**Europäisches Patentamt**

**European Patent Office**

**Office européen des brevets**

(19)

(11) Numéro de publication : **0 320 365 B1**

# FASCICULE DE BREVET EUROPEEN

(12)

(45) Date de publication du fascicule du brevet :
19.02.92 Bulletin 92/08

(51) Int. Cl.⁵ : **F16D 23/14**

(21) Numéro de dépôt : **88403082.6**

(22) Date de dépôt : **06.12.88**

(54) **Butée de débrayage actionnée par traction.**

(30) Priorité : **08.12.87 FR 8717036**

(43) Date de publication de la demande :
**14.06.89 Bulletin 89/24**

(45) Mention de la délivrance du brevet :
**19.02.92 Bulletin 92/08**

(84) Etats contractants désignés :
**AT DE ES GB IT SE**

(56) Documents cités :
**EP-A- 0 192 081**
**EP-A- 0 195 858**
**DE-A- 3 410 116**

(73) Titulaire : **S.N.R. ROULEMENTS**
**Boîte Postale 17 1, rue des Usines**
**F-74010 Annecy Cédex (FR)**

(72) Inventeur : **Meyet, Jean-Paul**
**10 Bis, Avenue de Chambéry**
**F-74000 Annecy (FR)**

(74) Mandataire : **Ernst-Schonberg, Michel**
**R.N.U.R. S. 0804 B.P. 103 8 & 10, avenue**
**Emile-Zola**
**F-92109 Boulogne Billancourt (FR)**

## Description

L'invention concerne une butée de débrayage actionnée par traction, qui comporte un manchon coulissant, un roulement monté sur ledit manchon qui possède une bague fixe sur laquelle doit être appliquée une force de débrayage par l'intermédiaire d'une fourchette, des corps roulants de transmission de la force de débrayage, une bague tournante de réception de ladite force. L'invention s'applique notamment à une butée portant un moyen de solidarisation de la bague tournante avec un dispositif débrayeur tel qu'un diaphragme et un élément élastique de maintien de la liaison axiale entre ledit dispositif et la bague tournante.

Une telle butée décrite par la publication FR-A- 2 558 228 utilisée pour la manoeuvre des embrayages à disque est montée à coulissement sur l'arbre d'entrée de la boîte de vitesses.

La publication EP-A-0192 081 décrit une butée d'embrayage tirée conforme au préambule de la revendication.

Un problème que posent ces butées résulte de la position relative de la fourchette par rapport à la bague fixe. Lorsque la fourchette prend directement appui sur la bague du roulement il importe que celle-ci occupe une position angulaire prédéterminée par rapport à la fourchette notamment lorsque la bague possède une surface d'appui d'étendue limitée. La solution connue à ce problème réside dans le fait que le bord du manchon porte une encoche dans laquelle un ressort à lame est logé avec un jeu fonctionnel et ce ressort est rigidement relié à la bague fixe. Néanmoins lorsque l'axe du roulement occupe une position légèrement excentrée par rapport à l'axe du manchon, les moyens précités doivent être complétés par des moyens limiteurs de déplacement omnidirectionnel du roulement durant le processus d'autocentrage de la butée.

Selon l'invention la bordure radiale d'assemblage de la bague fixe possède au moins deux encoches dont les bords encadrent des butées portées par une bordure d'assemblage du manchon desquelles elles sont séparées par un jeu variable correspondant à la capacité de déplacement du roulement.

La butée ainsi réalisée permet au roulement d'effectuer l'ensemble des déplacements radiaux prévus par construction sans préjudice pour sa position par rapport à la fourchette de commande.

D'autres caractéristiques et avantages de l'invention ressortiront de la description qui va suivre d'un exemple de réalisation de la butée, en référence au dessin annexé sur lequel :

– la figure 1 est une vue en coupe axiale d'un montage de la butée de débrayage suivant l'invention suivant la ligne 1-1 de la figure 2,
– la figure 2 est une vue en coupe transversale du montage selon la ligne 2-2 de la figure 1,
– les figures 3 et 4 sont des vues en coupe partielle des détails III-IV de la butée,
– la figure 5 est une vue en coupe partielle de la butée suivant la ligne 5 de la figure 2,
– la figure 6 est une représentation perspective du support du roulement de la butée.

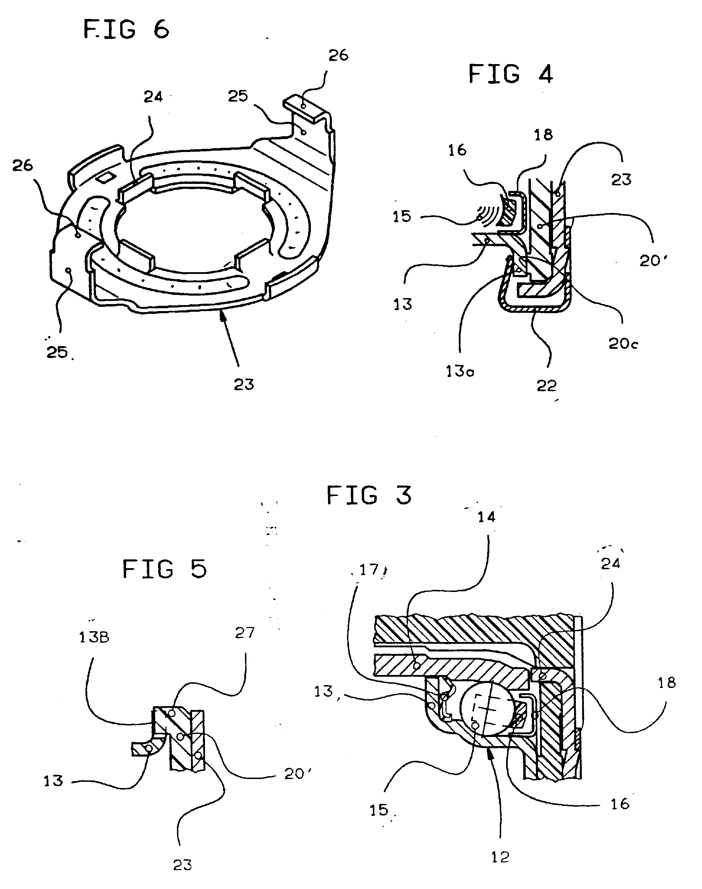

Dans la forme de mise en oeuvre de l'invention, le dispositif débrayeur 1 est de manière connue en soi formé par l'extrémité des doigts radiaux d'un diaphragme. De manière également connue en soi par la publication EP 0164871 pour l'attelage de la butée de débrayage au dispositif débrayeur, nécessaire à une action en traction de cette butée, il est rapporté sur ce dernier, à la faveur de l'ouverture centrale 2 du diaphragme une pièce annulaire 3 portant une bague à ressort 4 à languettes élastiques 5. Un jonc annulaire 6 élastiquement déformable radialement est engageable à des fins de solidarisation de la pièce annulaire 3 avec la butée de débrayage 10 dans une gorge de retenue 11 ménagée pour lui sur un élément de la butée formé par la bague tournante 14 d'un roulement 12. Ainsi que cela est montré à la figure 3, le roulement 12 comporte une bague fixe 13, des corps roulants 15 disposés dans les alvéoles d'une cage 16 et placés entre les bagues 13 et 14. L'étanchéité du roulement 12 est assurée par un joint d'étanchéité 17 et par un déflecteur 18 respectivement solidarisés avec la bague fixe 13.

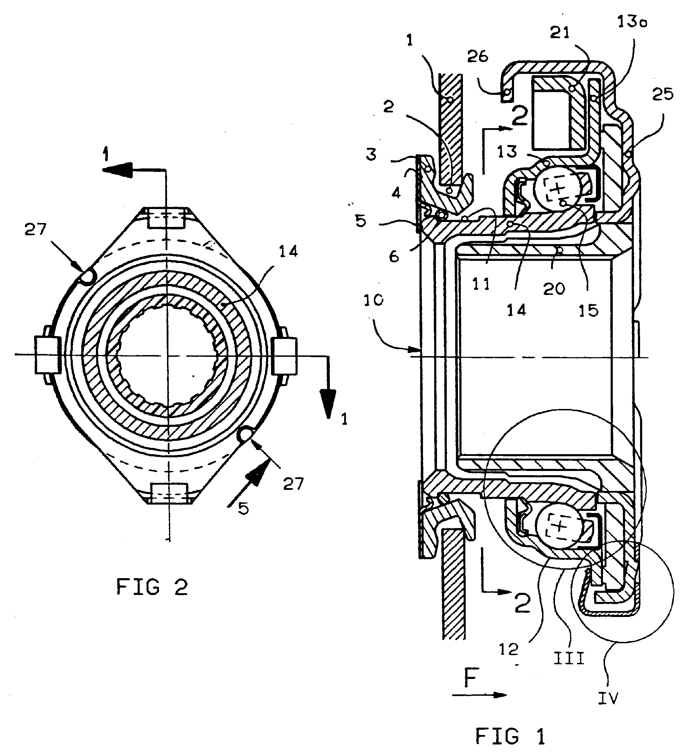

Le roulement 12 est monté sur un manchon coulissant 20 le long d'un guide tel qu'un arbre d'entrée de boîte de vitesses sous l'action d'une fourchette 21. La fourchette 21 applique ainsi que cela est bien connu une force de débrayage suivant le sens de la flèche F de la figure 1 sur une bordure radiale 13a qui s'étend à la périphérie de la bague fixe 13. La bordure 13a constitue par ailleurs l'appui de pinces d'assemblage à ressort 22 dont l'une a été représentée à la figure 4. Dans le but d'assurer au roulement 12 une capacité omnidirectionnelle de déplacement radial par rapport au manchon 20, le diamètre intérieur de la bague tournante 14 est supérieur au diamètre extérieur du manchon 20 et ce dernier porte un flasque 20' portant une surface 20a d'appui axial de la bague fixe 13 qui s'étend radialement le long de la bordure 13a.

Les pinces d'assemblage telles que 22 solidarisent l'ensemble constitué par la bague 13 et par le manchon 20 avec un support 23 sur lequel prend axialement appui le manchon.

Le support 23 montré plus en détail à la figure 6 possède des extensions axiales 24 débouchant à l'extérieur de la surface 20a et respectivement en appui axial sur la bague tournante 14 ou séparée de cette dernière par un faible jeu de montage.

La disposition précitée permet de la sorte de transmettre l'effort axial de montage ou de démontage à la bague 14.

Le support 23 porte par ailleurs des griffes 26 de retenue de la fourchette 21 formées à l'extrémité de bras 25 et le bord des griffes s'étend parallèlement au plan d'engagement de la fourchette 21 sur la butée.

Dans le but de limiter l'amplitude du déplacement radial du roulement par rapport au manchon, la bordure 13a d'assemblage de la bague 13 possède deux encoches 13b dont les bords constituent des butées des tétons 27 portés par la bordure du flasque d'assemblage 20′ du manchon 20. Les tétons 27 sont séparés des bords des encoches respectives par un jeu variable correspondant à la capacité omnidirectionnelle de déplacement du roulement.

**Revendications**

1. Butée de débrayage actionnée par traction qui comporte un manchon (20) coulissant, un roulement (12) monté sur ledit manchon (20) qui possède une bague fixe (13) avec une bordure radiale (13a) d'assemblage sur laquelle doit être appliquée une force de débrayage par l'intermédiaire d'une fourchette (21), des corps roulants (15) de transmission de la force de débrayage, une bague tournante (14) de réception de ladite force et dans laquelle le roulement (12) possède une capacité omnidirectionnelle de déplacement radial par rapport au manchon (20), caractérisée par le fait que la bordure radiale (13a) possède au moins deux encoches (13b) dont les bords encadrent des butées (27) portées par une bordure (20′) d'assemblage du manchon (20) desquelles elles sont séparées par un jeu variable correspondant à la capacité de déplacement du roulement.

**Patentansprüche**

1. Zugbetätigtes Kupplungsausrücklager, mit einer Gleitbuchse (20), einem auf dieser Gleitbuchse (20) angeordneten Wälzlager (12), das einen feststehenden Ring (13) aufweist, der mit einem radialen Verbindungsrand (13a) versehen ist, der mit einer mittels einer Ausrückgabel (21) zu übertragenden Kupplungskraft beaufschlagbar ist, Wälzkörpern (15) zur Ubertragung der Kupplungskraft, einem sich drehenden Ring (14) zur Aufnahme dieser Kraft, wobei das Wälzlager (12) in alle radialen Richtungen bezüglich der Gleitbuchse (20) verschiebbar ist, dadurch gekennzeichnet, daß der radiale Rand (13a) wenigstens zwei Ausschnitte (13b) aufweist, deren Ränder die von einem Verbindungsrand (20′) der Gleitbuchse (20) getragenen Anschläge umfassen, wobei sie von diesen durch ein veränderliches, dem Verschiebeweg des Lagers entsprechendes Spiel getrennt sind.

**Claims**

1. A clutch release bearing actuated by traction which comprises a sliding sleeve (20) and a roller bearing (12) mounted on the sleeve (20) and comprising a fixed ring (13) with a radial flange (13a) to which a declutching force has to be applied by means of a fork (21), rolling bodies (15) for the transmission of the declutching force and a rotary ring (14) receiving this force, the roller bearing (12) having a capacity for radial movement in all directions with respect to the sleeve (20), characterized in that the radial flange (13a) has at least two notches (13b) therein whose edges locate projections (27) borne by an assembly flange (20′) of the sleeve (20) and from which they are separated by a variable clearance corresponding to the capacity of movement of the roller bearing.

FIG 2

FIG 1

## FIG 6

## FIG 4

## FIG 5

## FIG 3